# EUROPEAN PATENT SPECIFICATION

(11) **EP 3 653 906 B1**
(45) Date of publication and mention of the grant of the patent: **06.04.2022**
(21) Application number: 19208839.1
(22) Date of filing: 13.11.2019
(51) Int. Cl.: F16H 19/00, A62C 2/24

(54) **ACTUATOR WITH FAIL-SAFE LOCKING MECHANISM**
AKTUATOR MIT AUSFALLSICHEREM VERRIEGELUNGSMECHANISMUS
ACTIONNEUR DOTÉ D'UN MÉCANISME DE VERROUILLAGE À SÉCURITÉ INTÉGRÉE

(30) Priority: 13.11.2018 US 201816189414
(43) Date of publication of application: 20.05.2020
(73) Proprietor: Johnson Controls Tyco IP Holdings LLP, Milwaukee, WI 53209 (US)
(72) Inventor: TALIKOT, Anand, 591317 Belgaum Karnataka (IN); KANNAN, Madan Kumar, 560008 Bangalore Karnataka (IN); KARUKOLA, Umamaheshwararao, 530007 Visakhapatnam Andhra Pradesh (IN); DOKE, Lakhan, 411033 Pune Maharashtra (IN)
(74) Representative: Trinks, Ole

(56) References cited:
- EP-A1- 0 216 732
- FR-A1- 2 967 119
- US-A1- 2017 065 839

## Description

### BACKGROUND

The present invention relates generally to actuators in a heating, ventilating, or air conditioning (HVAC) system and more particularly to actuators for damper systems that may be used in HVAC or similar systems.

HVAC actuators are used to operate a wide variety of HVAC components, such as air dampers, fluid valves, air handling units, and other components that are typically used in HVAC systems. For example, an actuator may be coupled to a damper in an HVAC system and may be used to drive the damper between an open position and a closed position. Document US 2017/065839 shows such a HVAC damper actuator with a locking mechanism.

It is an object of the present invention to provide a HVAC damper actuator with an alternative solution for a locking mechanism, which reduces the possibility of malfunction due to pressure differentials in the damper.

### SUMMARY

The above mentioned problem is solved by an actuator according to claim 1. The actuator includes an actuator housing having an interior portion. The interior portion includes a gear configured to rotate as a damper is opened and closed. The interior portion includes a cluster pinion coupled to the gear and rotating with the gear. The interior portion includes a locker which is rotatably coupled to a stopper and having a range of motion limited by the stopper. The interior portion includes the stopper fixedly coupled to an interior surface in the interior portion. The stopper includes a rib extending outwardly and limiting the range of motion of the locker. The rib is configured to deform at a temperature exceeding a threshold and permit rotational movement of the locker towards the cluster pinion to engage the cluster pinion. The interior portion includes a spring coupled to the locker. The spring is configured to bias the locker against the rib and towards the cluster pinion.

In some embodiments, the threshold is 72° C.

In some embodiments, the locker has a length defined by a distance between the cluster pinion and the end of the stopper.

In some embodiments, the locker is rotatably coupled to an end of a stopper.

In some embodiments, the locker includes a plurality of teeth configured to engage with the cluster pinion.

In some embodiments, the teeth are configured to permit rotation of the cluster pinion in one direction.

In some embodiments, the teeth are configured to prevent rotation of the cluster pinion in an opposite direction.

In some embodiments, the spring has one end coupled to the interior surface and another end coupled to the locker.

Another embodiment relates to a damper system. The damper system includes a damper configured to selectively seal a duct to prevent spreading of a gas, smoke, or fire. The damper system includes an actuator according to claims 1-6.

### BRIEF DESCRIPTION OF THE DRAWINGS

FIG. 1 is a drawing of a building equipped with a heating, ventilating, or air conditioning (HVAC) system and a building management system (BMS), according to an exemplary embodiment.
FIG. 2 is a schematic diagram of a waterside system which may be used to support the HVAC system of FIG. 1, according to an exemplary embodiment.
FIG. 3 is a block diagram of an airside system which may be used as part of the HVAC system of FIG. 1, according to an exemplary embodiment.
FIG. 4 is a block diagram of a BMS which may be implemented in the building of FIG. 1, according to an exemplary embodiment.
FIG. 5 is an environment including an actuator according to the invention.
FIG. 6 is an view of an exterior of the actuator of FIG. 5, according to the invention.
FIG. 7 is a view of an interior of the actuator of FIG. 5, according to the invention.
FIG. 8 is a view of a locking mechanism which may be used in the actuator of FIG. 5, according to the invention.
FIG. 9 is a view of the locking mechanism of FIG. 8 in a deployed state, according

to the invention.

### DETAILED DESCRIPTION

Before turning to the figures, which illustrate certain exemplary embodiments in detail, it should be understood that the present invention is not limited to the details or methodology set forth in the description or illustrated in the figures, but only limited by the appended claims. It should also be understood that the terminology used herein is for the purpose of description only and should not be regarded as limiting.

Referring generally to the FIGURES, an actuator for use in a damper system is shown, according to an exemplary embodiment. The actuator is coupled to a damper and configured to open and close the damper. The damper selectively seals a duct to prevent spreading of gas, smoke, or fire within a building. The actuator includes a gear that rotates as the damper is opened and closed. A cluster pinion is coupled to the gear and rotates with the gear. A locker is rotatably coupled to a stopper and has a range of motion which is limited by the stopper. The stopper is coupled to an interior surface of the actuator. The stopper includes a rib that extends outwardly and limits the range of motion of the locker. The rib is configured to deform at a temperature that exceeds a threshold. A spring is coupled to the locker and biasing the locker against the rib (e.g., towards the cluster pinion).

In operation during some conditions (such as those where a fire is present in the building), the rib may heat up. The rib may heat to a temperature that meets or exceeds the threshold temperature. The rib may deform due to the spring pulling the locker against the rib and the rib softening due to its elevated temperature. The locker may exert a force on the rib that causes the rib to break. The spring may pull the locker into contact with the cluster pinion. The locker may engage the cluster pinion and prevent reverse rotation of the cluster pinion. According to the embodiments described herein, fires, gas, smoke, etc. may be contained by the use of the damper and actuator. Further, the embodiments described herein may be less likely to malfunction due to pressure differentials across the damper (which may have caused the damper to open). Rather, the locker may prevent reverse rotation of the cluster pinion which, in turn, prevents opening of the damper. Various other benefits of the present invention will become apparent as follows.

### BUILDING MANAGEMENT SYSTEM AND HVAC SYSTEM

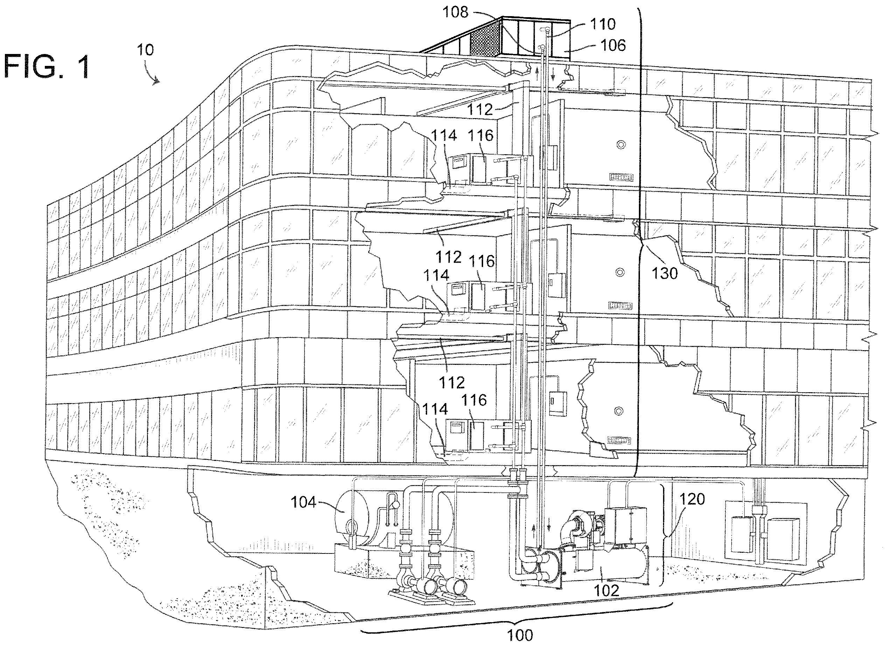

Referring now to FIGS. 1-4, an exemplary building management system (BMS) and HVAC system in which the systems and methods of the present disclosure may be implemented are shown, according to an exemplary embodiment. Referring particularly to FIG. 1, a perspective view of a building 10 is shown. Building 10 is served by a BMS. A BMS is, in general, a system of devices configured to control, monitor, and manage equipment in or around a building or building area. A BMS may include, for example, an HVAC system, a security system, a lighting system, a fire alerting system, any other system that is capable of managing building functions or devices, or any combination thereof.

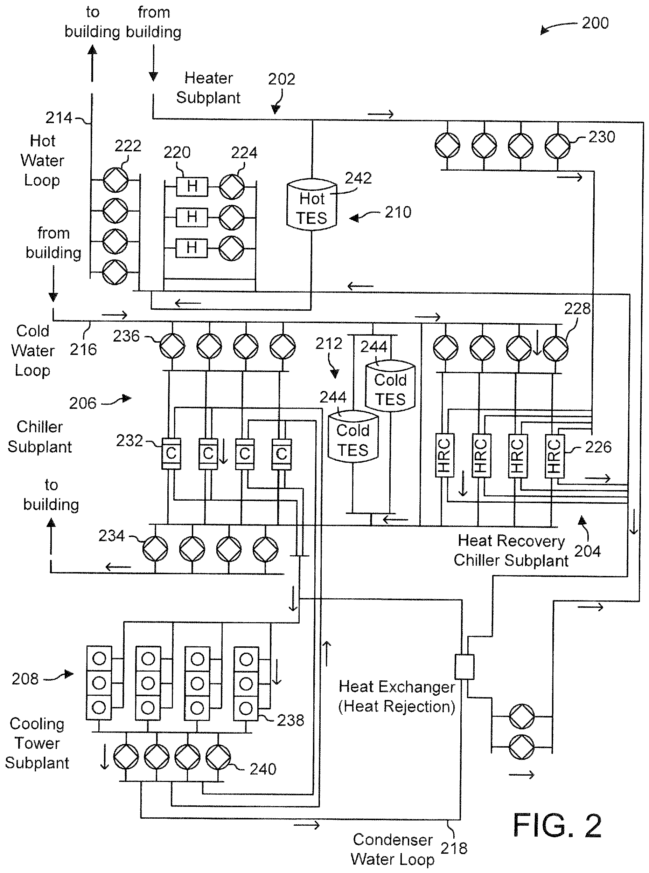

The BMS that serves building 10 includes an HVAC system 100. HVAC system 100 may include a plurality of HVAC devices (e.g., heaters, chillers, air handling units, pumps, fans, thermal energy storage, etc.) configured to provide heating, cooling, ventilation, or other services for building 10. For example, HVAC system 100 is shown to include a waterside system 120 and an airside system 130. Waterside system 120 may provide heated or chilled fluid to an air handling unit of airside system 130. Airside system 130 may use the heated or chilled fluid to heat or cool an airflow provided to building 10. An exemplary waterside system and airside system which may be used in HVAC system 100 are described in greater detail with reference to FIGS. 2-3.

HVAC system 100 is shown to include a chiller 102, a boiler 104, and a rooftop air handling unit (AHU) 106. Waterside system 120 may use boiler 104 and chiller 102 to heat or cool a working fluid (e.g., water, glycol, etc.) and may circulate the working fluid to AHU 106. In various embodiments, the HVAC devices of waterside system 120 may be located in or around building 10 (as shown in FIG. 1) or at an offsite location such as a central plant (e.g., a chiller plant, a steam plant, a heat plant, etc.). The working fluid may be heated in boiler 104 or cooled in chiller 102, depending on whether heating or cooling is required in building 10. Boiler 104 may add heat to the circulated fluid, for example, by burning a combustible material (e.g., natural gas) or using an electric heating element. Chiller 102 may place the circulated fluid in a heat exchange relationship with another fluid (e.g., a refrigerant) in a heat exchanger (e.g., an evaporator) to absorb heat from the circulated fluid. The working fluid from chiller 102 and/or boiler 104 may be transported to AHU 106 via piping 108.

AHU 106 may place the working fluid in a heat exchange relationship with an airflow passing through AHU 106 (e.g., via one or more stages of cooling coils and/or heating coils). The airflow may be, for example, outside air, return air from within building 10, or a combination of both. AHU 106 may transfer heat between the airflow and the working fluid to provide heating or cooling for the airflow. For example, AHU 106 may include one or more fans or blowers configured to pass the airflow over or through a heat exchanger containing the working fluid. The working fluid may then return to chiller 102 or boiler 104 via piping 110.

Airside system 130 may deliver the airflow supplied by AHU 106 (i.e., the supply airflow) to building 10 via air supply ducts 112 and may provide return air from building 10 to AHU 106 via air return ducts 114. In some embodiments, airside system 130 includes multiple variable air volume (VAV) units 116. For example, airside system 130 is shown to include a separate VAV unit 116 on each floor or zone of building 10. VAV units 116 may include dampers or other flow control elements that may be operated to control an amount of the supply airflow provided to individual zones of building 10. In other embodiments, airside system 130 delivers the supply airflow into one or more zones of building 10 (e.g., via supply ducts 112) without using intermediate VAV units 116 or other flow control elements. AHU 106 may include various sensors (e.g., temperature sensors, pressure sensors, etc.) configured to measure attributes of the supply airflow. AHU 106 may receive input from sensors located within AHU 106 and/or within the building zone and may adjust the flow rate, temperature, or other attributes of the supply airflow through AHU 106 to achieve set point conditions for the building zone.

Referring now to FIG. 2, a block diagram of a waterside system 200 is shown, according to an exemplary embodiment. In various embodiments, waterside system 200 may supplement or replace waterside system 120 in HVAC system 100 or may be implemented separate from HVAC system 100. When implemented in HVAC system 100, waterside system 200 may include a subset of the HVAC devices in HVAC system 100 (e.g., boiler 104, chiller 102, pumps, valves, etc.) and may operate to supply a heated or chilled fluid to AHU 106. The HVAC devices of waterside system 200 may be located within building 10 (e.g., as components of waterside system 120) or at an offsite location such as a central plant.

In FIG. 2, waterside system 200 is shown as a central plant having a plurality of subplants 202-212. Subplants 202-212 are shown to include a heater subplant 202, a heat recovery chiller subplant 204, a chiller subplant 206, a cooling tower subplant 208, a hot thermal energy storage (TES) subplant 210, and a cold thermal energy storage (TES) subplant 212. Subplants 202-212 consume resources (e.g., water, natural gas, electricity, etc.) from utilities to serve the thermal energy loads (e.g., hot water, cold water, heating, cooling, etc.) of a building or campus. For example, heater subplant 202 may be configured to heat water in a hot water loop 214 that circulates the hot water between heater subplant 202 and building 10. Chiller subplant 206 may be configured to chill water in a cold water loop 216 that circulates the cold water between chiller subplant 206 and building 10. Heat recovery chiller subplant 204 may be configured to transfer heat from cold water loop 216 to hot water loop 214 to provide additional heating for the hot water and additional cooling for the cold water. Condenser water loop 218 may absorb heat from the cold water in chiller subplant 206 and reject the absorbed heat in cooling tower subplant 208 or transfer the absorbed heat to hot water loop 214. Hot TES subplant 210 and cold TES subplant 212 may store hot and cold thermal energy, respectively, for subsequent use.

Hot water loop 214 and cold water loop 216 may deliver the heated and/or chilled water to air handlers located on the rooftop of building 10 (e.g., AHU 106) or to individual floors or zones of building 10 (e.g., VAV units 116). The air handlers push air past heat exchangers (e.g., heating coils or cooling coils) through which the water flows to provide heating or cooling for the air. The heated or cooled air may be delivered to individual zones of building 10 to serve the thermal energy loads of building 10. The water then returns to subplants 202-212 to receive further heating or cooling.

Although subplants 202-212 are shown and described as heating and cooling water for circulation to a building, it is understood that any other type of working fluid (e.g., glycol, CO₂, etc.) may be used in place of or in addition to water to serve the thermal energy loads. In other embodiments, subplants 202-212 may provide heating and/or cooling directly to the building or campus without requiring an intermediate heat transfer fluid. These and other variations to waterside system 200 are within the teachings of the present disclosure.

Each of subplants 202-212 may include a variety of equipment configured to facilitate the functions of the subplant. For example, heater subplant 202 is shown to include a plurality of heating elements 220 (e.g., boilers, electric heaters, etc.) configured to add heat to the hot water in hot water loop 214. Heater subplant 202 is also shown to include several pumps 222 and 224 configured to circulate the hot water in hot water loop 214 and to control the flow rate of the hot water through individual heating elements 220. Chiller subplant 206 is shown to include a plurality of chillers 232 configured to remove heat from the cold water in cold water loop 216. Chiller subplant 206 is also shown to include several pumps 234 and 236 configured to circulate the cold water in cold water loop 216 and to control the flow rate of the cold water through individual chillers 232.

Heat recovery chiller subplant 204 is shown to include a plurality of heat recovery heat exchangers 226 (e.g., refrigeration circuits) configured to transfer heat from cold water loop 216 to hot water loop 214. Heat recovery chiller subplant 204 is also shown to include several pumps 228 and 230 configured to circulate the hot water and/or cold water through heat recovery heat exchangers 226 and to control the flow rate of the water through individual heat recovery heat exchangers 226. Cooling tower subplant 208 is shown to include a plurality of cooling towers 238 configured to remove heat from the condenser water in condenser water loop 218. Cooling tower subplant 208 is also shown to include several pumps 240 configured to circulate the condenser water in condenser water loop 218 and to control the flow rate of the condenser water through individual cooling towers 238.

Hot TES subplant 210 is shown to include a hot TES tank 242 configured to store the hot water for later use. Hot TES subplant 210 may also include one or more pumps or valves configured to control the flow rate of the hot water into or out of hot TES tank 242. Cold TES subplant 212 is shown to include cold TES tanks 244 configured to store the cold water for later use. Cold TES subplant 212 may also include one or more pumps or valves configured to control the flow rate of the cold water into or out of cold TES tanks 244.

In some embodiments, one or more of the pumps in waterside system 200 (e.g., pumps 222, 224, 228, 230, 234, 236, and/or 240) or pipelines in waterside system 200 include an isolation valve associated therewith. Isolation valves may be integrated with the pumps or positioned upstream or downstream of the pumps to control the fluid flows in waterside system 200. In various embodiments, waterside system 200 may include more, fewer, or different types of devices and/or subplants based on the particular configuration of waterside system 200 and the types of loads served by waterside system 200.

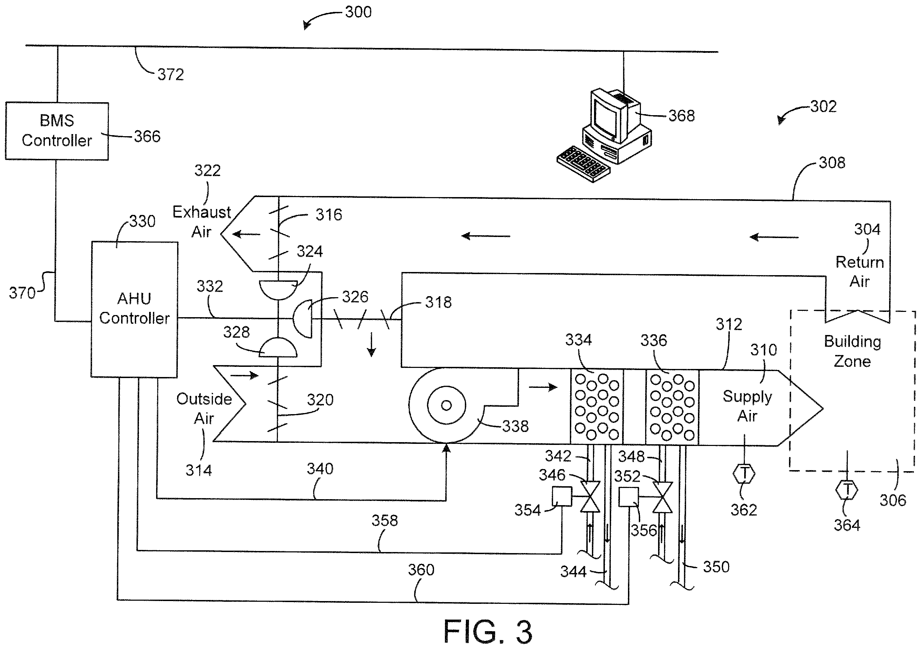

Referring now to FIG. 3, a block diagram of an airside system 300 is shown, according to an exemplary embodiment. In various embodiments, airside system 300 may supplement or replace airside system 130 in HVAC system 100 or may be implemented separate from HVAC system 100. When implemented in HVAC system 100, airside system 300 may include a subset of the HVAC devices in HVAC system 100 (e.g., AHU 106, VAV units 116, ducts 112-114, fans, dampers, etc.) and may be located in or around building 10. Airside system 300 may operate to heat or cool an airflow provided to building 10 using a heated or chilled fluid provided by waterside system 200.

In FIG. 3, airside system 300 is shown to include an economizer-type AHU 302. Economizer-type AHUs vary the amount of outside air and return air used by the air handling unit for heating or cooling. For example, AHU 302 may receive return air 304 from building zone 306 via return air duct 308 and may deliver supply air 310 to building zone 306 via supply air duct 312. In some embodiments, AHU 302 is a rooftop unit located on the roof of building 10 (e.g., AHU 106 as shown in FIG. 1) or otherwise positioned to receive both return air 304 and outside air 314. AHU 302 may be configured to operate exhaust air damper 316, mixing damper 318, and outside air damper 320 to control an amount of outside air 314 and return air 304 that combine to form supply air 310. Any return air 304 that does not pass through mixing damper 318 may be exhausted from AHU 302 through exhaust damper 316 as exhaust air 322.

Each of dampers 316-320 may be operated by an actuator. For example, exhaust air damper 316 may be operated by actuator 324, mixing damper 318 may be operated by actuator 326, and outside air damper 320 may be operated by actuator 328. Actuators 324-328 may communicate with an AHU controller 330 via a communications link 332. Actuators 324-328 may receive control signals from AHU controller 330 and may provide feedback signals to AHU controller 330. Feedback signals may include, for example, an indication of a current actuator or damper position, an amount of torque or force exerted by the actuator, diagnostic information (e.g., results of diagnostic tests performed by actuators 324-328), status information, commissioning information, configuration settings, calibration data, and/or other types of information or data that may be collected, stored, or used by actuators 324-328. AHU controller 330 may be an economizer controller configured to use one or more control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control actuators 324-328.

Still referring to FIG. 3, AHU 302 is shown to include a cooling coil 334, a heating coil 336, and a fan 338 positioned within supply air duct 312. Fan 338 may be configured to force supply air 310 through cooling coil 334 and/or heating coil 336 and provide supply air 310 to building zone 306. AHU controller 330 may communicate with fan 338 via communications link 340 to control a flow rate of supply air 310. In some embodiments, AHU controller 330 controls an amount of heating or cooling applied to supply air 310 by modulating a speed of fan 338.

Cooling coil 334 may receive a chilled fluid from waterside system 200 (e.g., from cold water loop 216) via piping 342 and may return the chilled fluid to waterside system 200 via piping 344. Valve 346 may be positioned along piping 342 or piping 344 to control a flow rate of the chilled fluid through cooling coil 334. In some embodiments, cooling coil 334 includes multiple stages of cooling coils that may be independently activated and deactivated (e.g., by AHU controller 330, by BMS controller 366, etc.) to modulate an amount of cooling applied to supply air 310.

Heating coil 336 may receive a heated fluid from waterside system 200 (e.g., from hot water loop 214) via piping 348 and may return the heated fluid to waterside system 200 via piping 350. Valve 352 may be positioned along piping 348 or piping 350 to control a flow rate of the heated fluid through heating coil 336. In some embodiments, heating coil 336 includes multiple stages of heating coils that may be independently activated and deactivated (e.g., by AHU controller 330, by BMS controller 366, etc.) to modulate an amount of heating applied to supply air 310.

Each of valves 346 and 352 may be controlled by an actuator. For example, valve 346 may be controlled by actuator 354 and valve 352 may be controlled by actuator 356. Actuators 354-356 may communicate with AHU controller 330 via communications links 358-360. Actuators 354-356 may receive control signals from AHU controller 330 and may provide feedback signals to controller 330. In some embodiments, AHU controller 330 receives a measurement of the supply air temperature from a temperature sensor 362 positioned in supply air duct 312 (e.g., downstream of cooling coil 334 and/or heating coil 336). AHU controller 330 may also receive a measurement of the temperature of building zone 306 from a temperature sensor 364 located in building zone 306.

In some embodiments, AHU controller 330 operates valves 346 and 352 via actuators 354-356 to modulate an amount of heating or cooling provided to supply air 310 (e.g., to achieve a setpoint temperature for supply air 310 or to maintain the temperature of supply air 310 within a setpoint temperature range). The positions of valves 346 and 352 affect the amount of heating or cooling provided to supply air 310 by cooling coil 334 or heating coil 336 and may correlate with the amount of energy consumed to achieve a desired supply air temperature. AHU controller 330 may control the temperature of supply air 310 and/or building zone 306 by activating or deactivating coils 334-336, adjusting a speed of fan 338, or a combination of both.

Still referring to FIG. 3, airside system 300 is shown to include a BMS controller 366 and a client device 368. BMS controller 366 may include one or more computer systems (e.g., servers, supervisory controllers, subsystem controllers, etc.) that serve as system-level controllers, application or data servers, head nodes, or master controllers for airside system 300, waterside system 200, HVAC system 100, and/or other controllable systems that serve building 10. BMS controller 366 may communicate with multiple downstream building systems or subsystems (e.g., HVAC system 100, a security system, a lighting system, waterside system 200, etc.) via a communications link 370 according to like or disparate protocols (e.g., LON, BACnet, etc.). In various embodiments, AHU controller 330 and BMS controller 366 may be separate (as shown in FIG. 3) or integrated. In an integrated implementation, AHU controller 330 may be a software module configured for execution by a processor of BMS controller 366.

In some embodiments, AHU controller 330 receives information from BMS controller 366 (e.g., commands, setpoints, operating boundaries, etc.) and provides information to BMS controller 366 (e.g., temperature measurements, valve or actuator positions, operating statuses, diagnostics, etc.). For example, AHU controller 330 may provide BMS controller 366 with temperature measurements from temperature sensors 362-364, equipment on/off states, equipment operating capacities, and/or any other information that may be used by BMS controller 366 to monitor or control a variable state or condition within building zone 306.

Client device 368 may include one or more human-machine interfaces or client interfaces (e.g., graphical user interfaces, reporting interfaces, text-based computer interfaces, client-facing web services, web servers that provide pages to web clients, etc.) for controlling, viewing, or otherwise interacting with HVAC system 100, its subsystems, and/or devices. Client device 368 may be a computer workstation, a client terminal, a remote or local interface, or any other type of user interface device. Client device 368 may be a stationary terminal or a mobile device. For example, client device 368 may be a desktop computer, a computer server with a user interface, a laptop computer, a tablet, a smartphone, a PDA, or any other type of mobile or non-mobile device. Client device 368 may communicate with BMS controller 366 and/or AHU controller 330 via communications link 372.

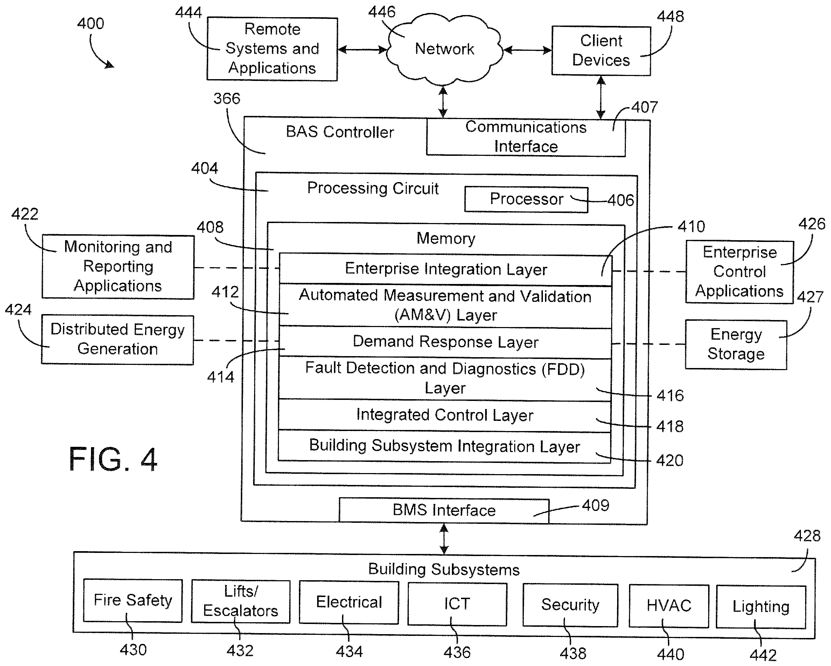

Referring now to FIG. 4, a block diagram of a BMS 400 is shown, according to an exemplary embodiment. BMS 400 may be implemented in building 10 to automatically monitor and control various building functions. BMS 400 is shown to include BMS controller 366 and a plurality of building subsystems 428. Building subsystems 428 are shown to include a building electrical subsystem 434, an information communication technology (ICT) subsystem 436, a security subsystem 438, an HVAC subsystem 440, a lighting subsystem 442, a lift/escalators subsystem 432, and a fire safety subsystem 430. In various embodiments, building subsystems 428 may include fewer, additional, or alternative subsystems. For example, building subsystems 428 may also or alternatively include a refrigeration subsystem, an advertising or signage subsystem, a cooking subsystem, a vending subsystem, a printer or copy service subsystem, or any other type of building subsystem that uses controllable equipment and/or sensors to monitor or control building 10. In some embodiments, building subsystems 428 include waterside system 200 and/or airside system 300, as described with reference to FIGS. 2-3.

Each of building subsystems 428 may include any number of devices, controllers, and connections for completing its individual functions and control activities. HVAC subsystem 440 may include many of the same components as HVAC system 100, as described with reference to FIGS. 1-3. For example, HVAC subsystem 440 may include any number of chillers, heaters, handling units, economizers, field controllers, supervisory controllers, actuators, temperature sensors, and/or other devices for controlling the temperature, humidity, airflow, or other variable conditions within building 10. Lighting subsystem 442 may include any number of light fixtures, ballasts, lighting sensors, dimmers, or other devices configured to controllably adjust the amount of light provided to a building space. Security subsystem 438 may include occupancy sensors, video surveillance cameras, digital video recorders, video processing servers, intrusion detection devices, access control devices and servers, or other security-related devices.

Still referring to FIG. 4, BMS controller 366 is shown to include a communications interface 407 and a BMS interface 409. Interface 407 may facilitate communications between BMS controller 366 and external applications (e.g., monitoring and reporting applications 422, enterprise control applications 426, remote systems and applications 444, applications residing on client devices 448, etc.) for allowing user control, monitoring, and adjustment to BMS controller 366 and/or subsystems 428. Interface 407 may also facilitate communications between BMS controller 366 and client devices 448. BMS interface 409 may facilitate communications between BMS controller 366 and building subsystems 428 (e.g., HVAC, lighting security, lifts, power distribution, business, etc.).

Interfaces 407 and 409 may be or may include wired or wireless communications interfaces (e.g., jacks, antennas, transmitters, receivers, transceivers, wire terminals, etc.) for conducting data communications with building subsystems 428 or other external systems or devices. In various embodiments, communications via interfaces 407 and 409 may be direct (e.g., local wired or wireless communications) or via a communications network 446 (e.g., a WAN, the Internet, a cellular network, etc.). For example, interfaces 407 and 409 may include an Ethernet card and port for sending and receiving data via an Ethernet-based communications link or network. In another example, interfaces 407 and 409 may include a Wi-Fi transceiver for communicating via a wireless communications network. In another example, one or both of interfaces 407 and 409 may include cellular or mobile phone communications transceivers. In one embodiment, communications interface 407 is a power line communications interface and BMS interface 409 is an Ethernet interface. In other embodiments, both communications interface 407 and BMS interface 409 are Ethernet interfaces or are the same Ethernet interface.

Still referring to FIG. 4, BMS controller 366 is shown to include a processing circuit 404 including a processor 406 and memory 408. Processing circuit 404 may be communicably connected to BMS interface 409 and/or communications interface 407 such that processing circuit 404 and the various components thereof may send and receive data via interfaces 407 and 409. Processor 406 may be implemented as a general purpose processor, an application specific integrated circuit (ASIC), one or more field programmable gate arrays (FPGAs), a group of processing components, or other suitable electronic processing components.

Memory 408 (e.g., memory, memory unit, storage device, etc.) may include one or more devices (e.g., RAM, ROM, Flash memory, hard disk storage, etc.) for storing data and/or computer code for completing or facilitating the various processes, layers, and modules described in the present application. Memory 408 may be or include volatile memory or non-volatile memory. Memory 408 may include database components, object code components, script components, or any other type of information structure for supporting the various activities and information structures described in the present application. According to an exemplary embodiment, memory 408 is communicably connected to processor 406 via processing circuit 404 and includes computer code for executing (e.g., by processing circuit 404 and/or processor 406) one or more processes described herein.

In some embodiments, BMS controller 366 is implemented within a single computer (e.g., one server, one housing, etc.). In various other embodiments, BMS controller 366 may be distributed across multiple servers or computers (e.g., that may exist in distributed locations). Further, while FIG. 4 shows applications 422 and 426 as existing outside of BMS controller 366, in some embodiments, applications 422 and 426 may be hosted within BMS controller 366 (e.g., within memory 408).

Still referring to FIG. 4, memory 408 is shown to include an enterprise integration layer 410, an automated measurement and validation (AM&V) layer 412, a demand response (DR) layer 414, a fault detection and diagnostics (FDD) layer 416, an integrated control layer 418, and a building subsystem integration later 420. Layers 410-420 may be configured to receive inputs from building subsystems 428 and other data sources, determine optimal control actions for building subsystems 428 based on the inputs, generate control signals based on the optimal control actions, and provide the generated control signals to building subsystems 428. The following paragraphs describe some of the general functions performed by each of layers 410-420 in BMS 400.

Enterprise integration layer 410 may be configured to serve clients or local applications with information and services to support a variety of enterprise-level applications. For example, enterprise control applications 426 may be configured to provide subsystem-spanning control to a graphical user interface (GUI) or to any number of enterprise-level business applications (e.g., accounting systems, user identification systems, etc.). Enterprise control applications 426 may also or alternatively be configured to provide configuration GUIs for configuring BMS controller 366. In yet other embodiments, enterprise control applications 426 may work with layers 410-420 to optimize building performance (e.g., efficiency, energy use, comfort, or safety) based on inputs received at interface 407 and/or BMS interface 409.

Building subsystem integration layer 420 may be configured to manage communications between BMS controller 366 and building subsystems 428. For example, building subsystem integration layer 420 may receive sensor data and input signals from building subsystems 428 and provide output data and control signals to building subsystems 428. Building subsystem integration layer 420 may also be configured to manage communications between building subsystems 428. Building subsystem integration layer 420 translates communications (e.g., sensor data, input signals, output signals, etc.) across a plurality of multi-vendor/multi-protocol systems.

Demand response layer 414 may be configured to optimize resource usage (e.g., electricity use, natural gas use, water use, etc.) and/or the monetary cost of such resource usage in response to satisfy the demand of building 10. The optimization may be based on time-of-use prices, curtailment signals, energy availability, or other data received from utility providers, distributed energy generation systems 424, from energy storage 427 (e.g., hot TES 242, cold TES 244, etc.), or from other sources. Demand response layer 414 may receive inputs from other layers of BMS controller 366 (e.g., building subsystem integration layer 420, integrated control layer 418, etc.). The inputs received from other layers may include environmental or sensor inputs such as temperature, carbon dioxide levels, relative humidity levels, air quality sensor outputs, occupancy sensor outputs, room schedules, and the like. The inputs may also include inputs such as electrical use (e.g., expressed in kWh), thermal load measurements, pricing information, projected pricing, smoothed pricing, curtailment signals from utilities, and the like.

According to an exemplary embodiment, demand response layer 414 includes control logic for responding to the data and signals it receives. These responses may include communicating with the control algorithms in integrated control layer 418, changing control strategies, changing setpoints, or activating/deactivating building equipment or subsystems in a controlled manner. Demand response layer 414 may also include control logic configured to determine when to utilize stored energy. For example, demand response layer 414 may determine to begin using energy from energy storage 427 just prior to the beginning of a peak use hour.

In some embodiments, demand response layer 414 includes a control module configured to actively initiate control actions (e.g., automatically changing setpoints) which minimize energy costs based on one or more inputs representative of or based on demand (e.g., price, a curtailment signal, a demand level, etc.). In some embodiments, demand response layer 414 uses equipment models to determine an optimal set of control actions. The equipment models may include, for example, thermodynamic models describing the inputs, outputs, and/or functions performed by various sets of building equipment. Equipment models may represent collections of building equipment (e.g., subplants, chiller arrays, etc.) or individual devices (e.g., individual chillers, heaters, pumps, etc.).

Demand response layer 414 may further include or draw upon one or more demand response policy definitions (e.g., databases, XML files, etc.). The policy definitions may be edited or adjusted by a user (e.g., via a graphical user interface) so that the control actions initiated in response to demand inputs may be tailored for the user's application, desired comfort level, particular building equipment, or based on other concerns. For example, the demand response policy definitions may specify which equipment may be turned on or off in response to particular demand inputs, how long a system or piece of equipment should be turned off, what setpoints may be changed, what the allowable set point adjustment range is, how long to hold a high demand setpoint before returning to a normally scheduled setpoint, how close to approach capacity limits, which equipment modes to utilize, the energy transfer rates (e.g., the maximum rate, an alarm rate, other rate boundary information, etc.) into and out of energy storage devices (e.g., thermal storage tanks, battery banks, etc.), and when to dispatch on-site generation of energy (e.g., via fuel cells, a motor generator set, etc.).

Integrated control layer 418 may be configured to use the data input or output of building subsystem integration layer 420 and/or demand response later 414 to make control decisions. Due to the subsystem integration provided by building subsystem integration layer 420, integrated control layer 418 may integrate control activities of the subsystems 428 such that the subsystems 428 behave as a single integrated supersystem. In an exemplary embodiment, integrated control layer 418 includes control logic that uses inputs and outputs from a plurality of building subsystems to provide greater comfort and energy savings relative to the comfort and energy savings that separate subsystems could provide alone. For example, integrated control layer 418 may be configured to use an input from a first subsystem to make an energy-saving control decision for a second subsystem. Results of these decisions may be communicated back to building subsystem integration layer 420.

Integrated control layer 418 is shown to be logically below demand response layer 414. Integrated control layer 418 may be configured to enhance the effectiveness of demand response layer 414 by enabling building subsystems 428 and their respective control loops to be controlled in coordination with demand response layer 414. This configuration may advantageously reduce disruptive demand response behavior relative to conventional systems. For example, integrated control layer 418 may be configured to assure that a demand response-driven upward adjustment to the setpoint for chilled water temperature (or another component that directly or indirectly affects temperature) does not result in an increase in fan energy (or other energy used to cool a space) that would result in greater total building energy use than was saved at the chiller.

Integrated control layer 418 may be configured to provide feedback to demand response layer 414 so that demand response layer 414 checks that constraints (e.g., temperature, lighting levels, etc.) are properly maintained even while demanded load shedding is in progress. The constraints may also include setpoint or sensed boundaries relating to safety, equipment operating limits and performance, comfort, fire codes, electrical codes, energy codes, and the like. Integrated control layer 418 is also logically below fault detection and diagnostics layer 416 and AM&V layer 412. Integrated control layer 418 may be configured to provide calculated inputs (e.g., aggregations) to these higher levels based on outputs from more than one building subsystem.

AM&V layer 412 may be configured to verify that control strategies commanded by integrated control layer 418 or demand response layer 414 are working properly (e.g., using data aggregated by AM&V layer 412, integrated control layer 418, building subsystem integration layer 420, FDD layer 416, or otherwise). The calculations made by AM&V layer 412 may be based on building system energy models and/or equipment models for individual BMS devices or subsystems. For example, AM&V layer 412 may compare a model-predicted output with an actual output from building subsystems 428 to determine an accuracy of the model.

FDD layer 416 may be configured to provide on-going fault detection for building subsystems 428, building subsystem devices (i.e., building equipment), and control algorithms used by demand response layer 414 and integrated control layer 418. FDD layer 416 may receive data inputs from integrated control layer 418, directly from one or more building subsystems or devices, or from another data source. FDD layer 416 may automatically diagnose and respond to detected faults. The responses to detected or diagnosed faults may include providing an alert message to a user, a maintenance scheduling system, or a control algorithm configured to attempt to repair the fault or to work-around the fault.

FDD layer 416 may be configured to output a specific identification of the faulty component or cause of the fault (e.g., loose damper linkage) using detailed subsystem inputs available at building subsystem integration layer 420. In other exemplary embodiments, FDD layer 416 is configured to provide "fault" events to integrated control layer 418 which executes control strategies and policies in response to the received fault events. According to an exemplary embodiment, FDD layer 416 (or a policy executed by an integrated control engine or business rules engine) may shut down systems or direct control activities around faulty devices or systems to reduce energy waste, extend equipment life, or assure proper control response.

FDD layer 416 may be configured to store or access a variety of different system data stores (or data points for live data). FDD layer 416 may use some content of the data stores to identify faults at the equipment level (e.g., specific chiller, specific AHU, specific terminal unit, etc.) and other content to identify faults at component or subsystem levels. For example, building subsystems 428 may generate temporal (i.e., time-series) data indicating the performance of BMS 400 and the various components thereof. The data generated by building subsystems 428 may include measured or calculated values that exhibit statistical characteristics and provide information about how the corresponding system or process (e.g., a temperature control process, a flow control process, etc.) is performing in terms of error from its setpoint. These processes may be examined by FDD layer 416 to expose when the system begins to degrade in performance and alert a user to repair the fault before it becomes more severe.

### ACTUATOR WITH FAIL-SAFE MECHANISM

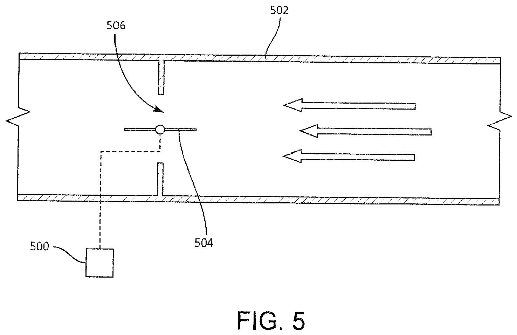

FIG. 5 is an environment including an actuator 500, according to the invention. The environment shown in FIG. 5 includes a duct 502 in an HVAC system, such as the HVAC system 100 described above with reference to FIG. 1 - FIG. 3. Hence, the duct 500 may carry or provision airflow to different regions of a building (such as building 10).

The actuator 500 may be coupled to and configured to control a damper 504 within the duct 502. The damper 504 may be configured to selectively seal off the duct 502. For instance, as shown, the damper 504 may rotate open to permit airflow through a passage 506 within the duct 502, and may rotate closed to prevent or inhibit airflow through the passage 506. While shown as rotating, in some embodiments, the damper 504 may move laterally to selectively seal off the duct 502. The actuator 500 may be configured to rotate the or laterally move the damper 504. The actuator 500 may control the damper 504 to seal off the duct 502.

The actuator 500 may be configured to seal off the duct 502 based on a number of conditions. For instance, the actuator 500 may seal the duct 502 to prevent the spreading of a fire, smoke, gas, etc. The actuator 500 may receive a signal from a controller (e.g., such as the AHU controller 330, BMS controller 366, etc.) which instructs the actuator 500 to close or open the damper 504. In some embodiments, the damper 504 may be defaulted in an open position (e.g., as shown in FIG. 5). The controller may be configured to communicate the signal to close the damper when a fire, smoke, gas, etc. is detected (e.g., by the fire safety subsystem 430 or similar subsystem of the building 10). The controller may trigger closing of particular dampers 504 to localize (or contain) a fire. When the actuator 500 receives the signal from the controller, the actuator 500 may be configured to rotate, slide, or otherwise move the damper 504 into the closed position to seal the duct 502.

In some instances, when the actuator 500 moves the damper 504 into the closed position, heat may be trapped in the duct 502. The heat may create a pressure differential on opposite sides of the damper 504. As the pressure differential increases, the damper 504 may be forced open. The actuator 500 may experience reverse rotation due to the pressure increase in the duct 502. When the damper 504 is opened, the fire, smoke, gas, etc. may no longer be contained and thus may spread throughout a building 10 and cause increased damage or safety concerns.

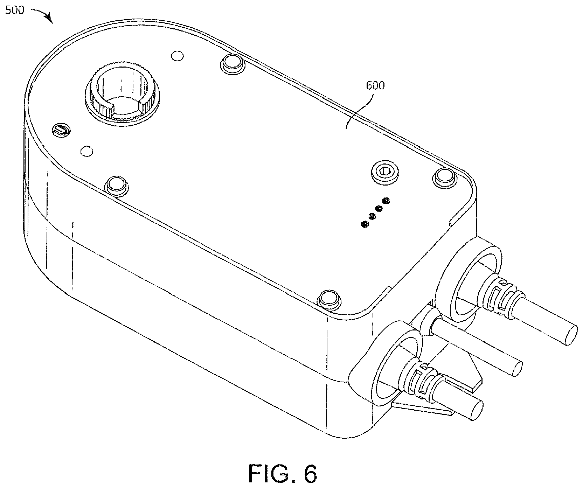

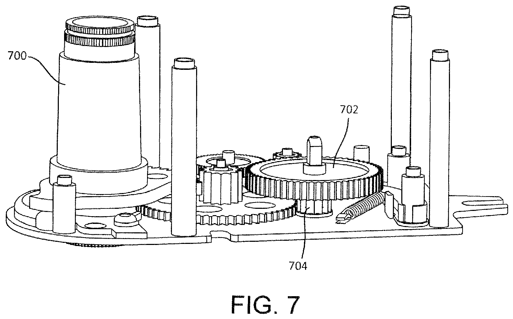

Referring to FIG. 6 - FIG. 7, the actuator 500 may include various components or mechanisms for preventing reverse rotation of the damper 504. Specifically, FIG. 6 is an view of an exterior of the actuator 500, and FIG. 7 is view of an interior of the actuator 500, according to exemplary embodiments. The actuator 500 may include an actuator housing 600. The actuator housing 700 may define an exterior surface and an interior portion. The components shown in FIG. 7 may thus be included in the interior portion of the actuator 500 (e.g., confined by the housing 600).

The actuator 500 may include various gears for controlling movement of the damper 504. A motor (not shown) may be configured to rotate one of the gears, which may output rotational torque on a yoke 702. The yoke 700 may be configured for connection (e.g., either indirect or direct connection) to the damper 504.

As shown in FIG. 7, a gear 702 may include a cluster pinion 704. The gear 702 may be configured to rotate as the damper 504 is opened and closed. Hence, the gear 702 may rotate in one direction as the damper 504 is opened, and the gear 702 may rotate in the opposite direction as the damper 504 is closed. The cluster pinion 704 may be coupled to the gear 702 and, thus, may rotate with (e.g., in the same direction as) the gear 702.

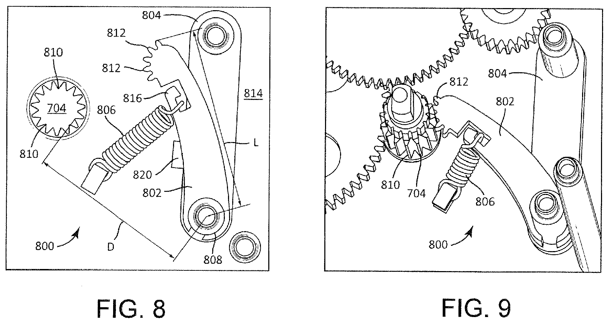

Referring now to FIG. 7 and FIG. 8, the actuator 500 may include a locking mechanism 800. Specifically, FIG. 8 depicts a locking mechanism 800 which may be used in the actuator 500, according to an exemplary embodiment. The locking mechanism 800 is shown to include a locker 802, a stopper 804, and a spring 806.

The locker 802 may be constructed of, for instance, metal, or other conductive or heat resistant material. The locker 802 may be configured to engage with the cluster pinion 704. The locker 802 may have a length L corresponding to a distance D between a pivoting portion 808 of the locker 802 and the cluster pinion 704. The locker 802 may have a length equal to or exceeding the distance D between the pivoting portion 808 such that the locker 802 can contact the cluster pinion 704. For instance, the cluster pinion 704 may include a number of grooves 810. The locker 802 may include corresponding teeth 812 which are sized to engage the grooves 810. When the locker 802 rotates toward the cluster pinion 704, the teeth 812 on the locker 802 may engage the grooves 810 and prevent rotation of the cluster pinion 704 in one or more directions. For instance, the teeth 812 may be shaped to prevent rotation of the cluster pinion 704 in one direction (such as the direction the cluster pinion 704 rotates when the damper 504 is opened) but permit rotation in the opposite direction (such as the direction the cluster pinion 704 rotates when the damper 504 is closed).

The locker 802 may be pulled toward the cluster pinion 804 by the spring 806. The spring 806 may be mounted to the interior surface 814 of the housing 600, and coupled to the locker 802. As shown in FIG. 8, the locker 802 may include a hook 816, and an end (e.g., opposite the mounting end) may loop around the hook 816. The spring 806 may be stretched to loop around the hook 816. As the spring 806 is stretched out to loop around the hook 816, the spring 806 may pull the locker 802 towards the cluster pinion 804.

The locker 802 may be locked into position by the stopper 804. The stopper 804 may be mounted to the interior surface 814 of the housing at opposing ends 808 and 816. While two mounting points are shown, the stopper 804 may be mounted via any number of mounting points. The stopper 804 may include a rib 820 extending outwardly from the stopper 804. As shown in FIG. 8, the locker 802 may be stacked on top of the stopper 804, and the rib 820 may extend upwardly from the stopper 804 towards and adjacent to the locker 802. The rib 820 may be configured to prevent rotational movement of the locker 802 toward the cluster pinion 804. The rib 820 may thus limit the range of motion of the locker 802.

The rib 820 may be designed or configured to deform at certain temperatures. For instance, the rib 820 may be configured to deform when a temperature of the rib exceeds a temperature threshold. The rib 820 may deform due to the temperature and due to a tensional load of the locker 802 acting on the rib 820. For instance, where the temperature of rib 820 increases, the rib 820 may become softened. As the spring 806 pulls the locker 802 towards the cluster pinion 704, the locker 802 may exert a force on the rib 820. The force on the rib 820 may cause the rib 820 to become deformed and, eventually, break. The temperature threshold may be, for instance, 72° C, though the temperature threshold may be modified, changed, etc. according to various design needs and considerations. For instance, where an earlier reaction time is desired, the temperature threshold may be decreased to increase the sensitivity of the locking mechanism 800.

Referring now to FIG. 9 a view of the locking mechanism 800 in a deployed state is shown, according to an exemplary embodiment. As shown in FIG. 9, the rib 820 (of FIG. 8) deformed and broke, thus no longer limiting the range of motion of the locker 802 and preventing the locker 802 from engaging the cluster pinion 704. The spring 806 pulls the locker 802 towards (and into contact with) the cluster pinion 704. The locker 802 thus engages the cluster pinion 704.

When the locker 802 engages the cluster pinion 704, the teeth 812 of the locker 802 may be positioned between the grooves 810 of the cluster pinion 704. The teeth 812 may prevent rotation of the cluster pinion 704 in one direction. For instance, as shown in FIG. 9, the teeth 812 may be shaped to prevent rotation of the cluster pinion in the clockwise direction. The clockwise direction may be the direction in which the cluster pinion 704 rotates when the damper 502 moves from a closed to an open position. The cluster pinion 704 may otherwise rotate (e.g., if not for the locker 802) in the clockwise direction when a pressure difference across the damper 502 causes the damper 502 to open.

The teeth 812 may be configured to permit rotation of the cluster pinion 704 in the opposite direction (e.g., in the counterclockwise direction for the embodiment depicted in FIG. 9). The cluster pinion 704 may rotate in the counterclockwise direction when the damper 502 moves from an open position to a closed position. Thus, where a condition is present that causes the actuator 500 to close the damper 502 and the rib 820 deformed such that the locker 802 is engaged with the cluster pinion 704, the actuator 500 may still be permitted to close the damper 502. However, the actuator 500 may only be permitted to move the damper 502 in one direction (e.g., due to the restriction caused by the locker 802 acting on the cluster pinion 704).

The embodiments described herein may constrain the motion of a damper 502 by the locker 802 engaging the cluster pinion 704 to prevent opening of the damper 502. Thus, the embodiments described herein may lessen the likelihood of or inhibit spreading of fire, gas, or smoke throughout a building. The embodiments described herein may prevent backlash on any of the gears due to the damper 502 being forced open due to the pressure difference across the damper 502. The embodiments described herein may provide a simple mechanism for containing fires, smoke, gas, or other noxious substances throughout a building.

### CONFIGURATION OF EXEMPLARY EMBODIMENTS

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present invention, as defined by the appended claims.

## Claims

1. An actuator (500) for driving a damper (504) between an open position and a closed position, comprising:
- an actuator housing (600) having an interior portion, the interior portion including:
- a gear (702) configured to rotate as the damper (504) is opened and closed;
- a cluster pinion (704) coupled to the gear (702) and rotating with the gear (702);
- a locker (802) rotatably coupled to a stopper (804) and having a range of motion limited by the stopper (804);
- the stopper (804) being fixedly coupled to an interior surface (814) in the interior portion, the stopper (804) including a rib (820) extending outwardly and limiting the range of motion of the locker (802), wherein the rib (820) is configured to deform at a temperature exceeding a threshold and permit rotational movement of the locker (802) towards the cluster pinion (704) to engage the cluster pinion (704); and
- a spring (806) coupled to the locker (802), the spring (806) configured to bias the locker (802) against the rib (820) and towards the cluster pinion (704).

2. The actuator (500) of claim 1,
wherein the threshold is 72° C.

3. The actuator (500) of claim 1 or 2,
wherein the locker (802) has a length defined by a distance between the cluster pinion (704) and the end of the stopper (804).

4. The actuator (500) of one of claims 1 to 3,
wherein the locker (802) is rotatably coupled to the end of the stopper (804).

5. The actuator (500) of one of claims 1 to 4,
wherein the locker (802) includes a plurality of teeth (812) configured to engage with the cluster pinion (704), wherein the teeth (812) are preferably configured to permit rotation of the cluster pinion (704) in one direction, and wherein the teeth (812) are preferably configured to prevent rotation of the cluster pinion (704) in an opposite direction.

6. The actuator (500) of one of claims 1 to 5,
wherein the spring (806) has one end coupled to the interior surface (814) and another end coupled to the locker (802).

7. A damper system, comprising:
- a damper (504) configured to selectively seal a duct (502) to prevent spreading of a gas, smoke or fire; and
- an actuator (500) of one of claims 1 to 6.

## Patentansprüche

1. Aktor (500) zum Antreiben eines Dämpfers (504) zwischen einer offenen Position
und einer geschlossenen Position, umfassend:
- ein Aktorgehäuse (600) mit einem Innenabschnitt, wobei der Innenabschnitt Folgendes umfasst:
- ein Zahnrad (702), das so konfiguriert ist, dass es sich dreht, wenn der Dämpfer (504) geöffnet und geschlossen wird;
- ein Gruppenritzel (704), das mit dem Zahnrad (702) gekoppelt ist und sich mit dem Zahnrad (702) dreht;
- eine Sperre (802), die drehbar mit einem Stopper (804) verbunden ist und einen Bewegungsbereich hat, der durch den Stopper (804) begrenzt ist;
- wobei der Stopper (804) fest mit einer Innenfläche (814) im Innenabschnitt gekoppelt ist, wobei der Stopper (804) eine Rippe (820) umfasst, die sich nach außen erstreckt und den Bewegungsbereich der Sperre (802) begrenzt, wobei die Rippe (820) konfiguriert ist, um sich bei einer Temperatur zu verformen, die einen Schwellenwert überschreitet, und eine Drehbewegung der Sperre (802) in Richtung des Gruppenritzels (704) zuzulassen, um mit dem Gruppenritzel (704) in Eingriff zu treten; und
- eine Feder (806), die mit der Sperre (802) gekoppelt ist, wobei die Feder (806) konfiguriert ist, um die Sperre (802) gegen die Rippe (820) und in Richtung des Gruppenritzels (704) vorzuspannen.

2. Aktor (500) nach Anspruch 1,
wobei der Schwellenwert 72 °C beträgt.

3. Aktor (500) nach Anspruch 1 oder 2,
wobei die Sperre (802) eine Länge hat, die durch einen Abstand zwischen dem Gruppenritzel (704) und dem Ende des Stoppers (804) definiert ist.

4. Aktor (500) nach einem der Ansprüche 1 bis 3,
wobei die Sperre (802) drehbar mit dem Ende des Stoppers (804) verbunden ist.

5. Aktor (500) nach einem der Ansprüche 1 bis 4,
wobei die Sperre (802) eine Vielzahl von Zähnen (812) umfasst, die konfiguriert sind, um mit dem Gruppenritzel (704) in Eingriff zu treten, wobei die Zähne (812) vorzugsweise konfiguriert sind, um eine Drehung des Gruppenritzels (704) in eine Richtung zu ermöglichen, und wobei die Zähne (812) vorzugsweise konfiguriert sind, um eine Drehung des Gruppenritzels (704) in eine entgegengesetzte Richtung zu verhindern.

6. Aktor (500) nach einem der Ansprüche 1 bis 5,
wobei ein Ende der Feder (806) mit der Innenfläche (814) gekoppelt ist und ein anderes Ende mit der Sperre (802) gekoppelt ist.

7. Dämpfersystem, umfassend:
- einen Dämpfer (504), der konfiguriert ist, um selektiv einen Kanal (502) abzudichten, um die Ausbreitung eines Gases, Rauchs oder Feuers zu verhindern; und
- einen Aktor (500) nach einem der Ansprüche 1 bis 6.

## Revendications

1. Actionneur (500) pour entraîner un amortisseur (504) entre une position ouverte et une position fermée, comprenant :
- un boîtier d'actionneur (600) ayant une partie intérieure, la partie intérieure comportant :
- un engrenage (702) conçu pour tourner lorsque l'amortisseur (504) est ouvert et fermé ;
- une roue d'engrenage (704) couplée à l'engrenage (702) et tournant avec l'engrenage (702) ;
- un verrou (802) couplé de manière rotative à une butée (804) et ayant une plage de déplacement limitée par la butée (804) ;
- la butée (804) étant couplée fixement à une surface intérieure (814) dans la partie intérieure, la butée (804) comportant une nervure (820) s'étendant vers l'extérieur et limitant la plage de déplacement du verrou (802), dans lequel la nervure (820) est conçue pour se déformer à une température dépassant un seuil et pour permettre un déplacement en rotation du verrou (802) vers la roue d'engrenage (704) pour venir en prise avec la roue d'engrenage (704) ; et
- un ressort (806) couplé au verrou (802), le ressort (806) étant conçu pour solliciter le verrou (802) contre la nervure (820) et vers la roue d'engrenage (704) .

2. Actionneur (500) selon la revendication 1,
dans lequel le seuil est de 72 °C.

3. Actionneur (500) selon la revendication 1 ou 2,
dans lequel le verrou (802) a une longueur définie par une distance entre la roue d'engrenage (704) et l'extrémité de la butée (804).

4. Actionneur (500) selon l'une des revendications 1 à 3,
dans lequel le verrou (802) est couplé de manière rotative à l'extrémité de la butée (804).

5. Actionneur (500) selon l'une des revendications 1 à 4, dans lequel le verrou (802) comporte une pluralité de dents (812) conçues pour venir en prise avec la roue d'engrenage (704), dans lequel les dents (812) sont de préférence conçues pour permettre la rotation de la roue d'engrenage (704) dans une direction, et dans lequel les dents (812) sont de préférence conçues pour empêcher la rotation de la roue d'engrenage (704) dans une direction opposée.

6. Actionneur (500) selon l'une des revendications 1 à 5, dans lequel le ressort (806) a une extrémité couplée à la surface intérieure (814) et une autre extrémité couplée au verrou (802).

7. Système d'amortissement, comprenant :
- un amortisseur (504) conçu pour sceller sélectivement un conduit (502) afin d'empêcher la propagation d'un gaz, d'une fumée ou d'un feu ; et
- un actionneur (500) selon l'une des revendications 1 à 6.
